# EUROPEAN PATENT SPECIFICATION

(11) **EP 3 503 641 B1**
(45) Date of publication and mention of the grant of the patent: **17.03.2021**
(21) Application number: 16913191.9
(22) Date of filing: 17.08.2016
(51) Int. Cl.: H04L 5/00

(54) **TECHNIQUES FOR IMPROVED ICI MANAGEMENT**
TECHNIKEN ZUR VERBESSERUNG DER ICI-VERWALTUNG
TECHNIQUES D'AMÉLIORATION DE GESTION DES INTERFÉRENCES DE TYPE ICI

(43) Date of publication of application: 26.06.2019
(73) Proprietor: Beijing Xiaomi Mobile Software Co., Ltd., Beijing 100085 (CN)
(72) Inventor: ZHOU, Juejia, Beijing 100085 (CN); HONG, Wei, Beijing 100085 (CN); ZHANG, Ming, Beijing 100085 (CN)
(74) Representative: Cabinet Beau de Loménie
(86) International application number: PCT/CN2016/095766
(87) International publication number: WO 2018/032434

(56) References cited:
- WO-A1-2007/097671
- WO-A1-2017/052857
- WO-A2-2009/131396
- CN-A- 101 360 320
- CN-A- 102 474 829
- US-A1- 2005 254 555

## Description

### FIELD

The present disclosure relates to a technical field of mobile communication, and particularly, to a communication method and apparatus.

### BACKGROUND

After years of development, the mobile communication technology has been improved to varying degrees in aspects such as, data transmission rate, coverage area, transmission delay, etc. For example, during communication, a base station may perform one or more data transmissions in a subframe in order to meet the requirement of a lower feedback delay. Currently, during communication, a macro base station may obtain subframe configuration information of a micro base station, configure an upstream subframe possibly disturbing a transmission of the micro base station as a blank subframe according to the subframe configuration information of the micro base station and the macro base station, and then communicate based on the current subframe configuration, so as to avoid interference on a downstream transmission of the micro base station.

The PCT application with a publication No. of WO 2009/131396 A2 provides a method of performing communication using a TDD (Time Division Duplex) mode, the method comprising receiving, from a second system, TDD frame configuration information of the second system, which comprises information on punctured symbol, the information on punctured symbol to be obtained based on TDD frame configuration information of a first system and operating based on the received TDD frame configuration information of the second system.

According to an US application (US 2005/0254555 A1), inter-sector interference for a target user in a sector may be controlled by selectively blanking or attenuating transmit powers for interfering users in neighboring sectors whenever their transmissions collide. The sector provides the frequency hopping (FH) sequence or subband usage for the target user to the neighboring sectors. Each neighboring sector uses the target user's FH sequence to form a blanking pattern. Each neighboring sector then either blanks or reduces transmit power for each subband in its blanking pattern. Each user in each neighboring sector receives either (1) punctured symbols for subbands in the blanking pattern, if blanking is performed, or (2) lower energy symbols for these subbands, if attenuation is performed. In any case, the target user and each neighboring user may process their received symbols in the normal manner and do not need to be informed of the blanking/attenuation.

### SUMMARY

In view of the fact in related arts, a communication method and apparatus are provided by the present disclosure.

The invention is defined by a method according to claim 1, an apparatus according to claim 7, and a computer program according to claim 13. Further preferred embodiments are defined by the dependent claims.

The scope of the present invention is determined only by the scope of the appended claims.

Technical solutions provided by embodiments of the present disclosure may include at least some of the following beneficial effects.

The method and apparatus described according to an exemplary embodiment of the present disclosure avoid interference on the communication of the first base station on downstream symbols by configuring a symbol that is predicted to cause interference during the communication of the second base station as a blank symbol. Since a symbol is a smaller time span within a subframe, as compared with related arts, the approach to configure a blank symbol may not only save subframe resources, but also would not cause too much delay in a communication progress of the second base station. Therefore, communication efficiency is improved.

In a possible implementation, the second base station enables UE to communicate with a predetermined power, so as to ensure communication efficiency of the second base station, while avoiding interference on the first base station.

It is to be understood that both the forgoing general description and the following detailed description are exemplary only, and are not restrictive of the present disclosure.

### BRIEF DESCRIPTION OF THE DRAWINGS

The accompanying drawings, which are incorporated in and constitute a part of this specification, illustrate embodiments and, together with the description, serve to explain the principles of the invention which is defined only by the appended claims.
Fig. 1 is a flow diagram of a communication method illustrated according to an exemplary embodiment.
Fig. 2A is a schematic diagram of a subframe format illustrated according to an exemplary embodiment.
Fig. 2B is a flow diagram of a communication method illustrated according to an exemplary embodiment.
Fig. 3 is a schematic diagram of a configuration of blank symbol illustrated according to an exemplary embodiment.
Fig. 4 is a schematic diagram of a configuration of blank symbol illustrated according to an exemplary embodiment.
Fig. 5 is a schematic diagram of a configuration of blank symbol illustrated according to an exemplary embodiment.
Fig. 6 is a schematic diagram of a configuration of blank symbol illustrated according to an exemplary embodiment.
Fig. 7 is a schematic diagram of a configuration of blank symbol illustrated according to an exemplary embodiment.
Fig. 8 is a schematic diagram of a configuration of blank symbol illustrated according to an exemplary embodiment.
Fig. 9 is a schematic diagram of a configuration of blank symbol illustrated according to an exemplary embodiment.
Fig. 10 is a block diagram of a communication apparatus illustrated according to an exemplary embodiment.
Fig. 11 is a structure diagram of a base station illustrated according to an exemplary embodiment.

### DETAILED DESCRIPTION

In order to make the purposes, technical solutions and advantages of the present disclosure more clearly, embodiments of the present disclosure will be further detailed in connection with the accompanying drawings below.

Reference will now be made in detail to exemplary embodiments, examples of which are illustrated in the accompanying drawings. The following description refers to the accompanying drawings in which same reference numbers in different drawings represent same or similar elements unless otherwise described. The implementations set forth in the following description of exemplary embodiments do not represent all implementations consistent with the disclosure. Instead, they are merely examples of apparatus and methods consistent with aspects related to the disclosure as recited in the appended claims.

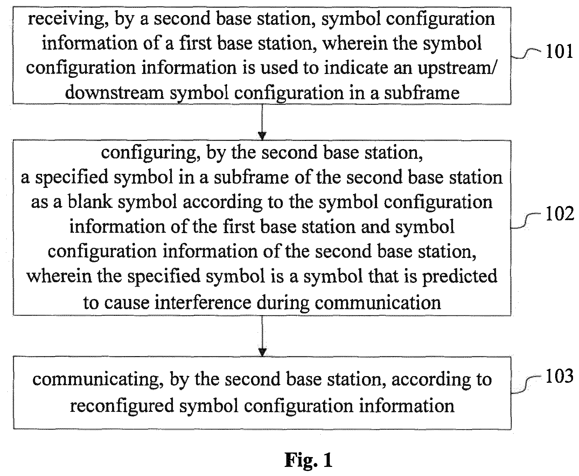

Fig. 1 is a flow diagram of a communication method illustrated according to an exemplary embodiment. As shown in Fig. 1, the communication method is performed by a second base station. The communication method includes the following steps. In step 101, the second base station receives symbol configuration information of a first base station. The symbol configuration information is used to indicate an upstream/downstream symbol configuration in a subframe.

In step 102, the second base station configures a specified symbol in a subframe of the second base station as a blank symbol according to the symbol configuration information of the first base station and symbol configuration information of the second base station. The specified symbol is a symbol that is predicted to cause interference during communication.

In step 103, the second base station communicates according to reconfigured symbol configuration information.

In related arts, a macro base station configures a whole subframe as a blank subframe, in order to avoid interference on downstream communication of an associated base station. The manner in which the whole subframe is configured as the blank subframe not only wastes subframe resources but also delays communication progress of the second base station. As a result, communication efficiency of the second base station is very low.

Embodiments of the present disclosure avoid interference on the communication of the first base station on downstream symbols by configuring a symbol that is predicted to cause interference during the communication of the second base station as a blank symbol. Since a symbol is a smaller time span within a subframe, as compared with related arts, the approach to configure a blank symbol may not only save subframe resources, but also would not cause too much delay in a communication progress of the second base station. Therefore, communication efficiency is improved.

In a possible implementation, the method may include: receiving, by the second base station, the symbol configuration information sent by the first base station after establishment of the second base station; or receiving, by the second base station, the symbol configuration information sent by the first base station after a change of symbol configuration information; or receiving, by the second base station, the symbol configuration information sent by the first base station after a change of business requirement.

In a possible implementation, the method may include: in the case that the subframes of both the first base station and the second base station include one or more upstream symbols and downstream symbols, determining, by the second base station, an overlap position of the one or more upstream symbols of the second base station and the one or more downstream symbols of the first base station, and configuring, by the second base station, an upstream symbol at the overlap position as the blank symbol; or in the case that the subframe of the first base station includes one or more upstream symbols and downstream symbols and the subframe of the second base station includes one or more upstream symbols but no downstream symbol, configuring, by the second base station, each of the upstream symbols in the subframe of the second base station as the blank symbol; or in the case that the subframe of the second base station includes one or more upstream symbols and downstream symbols and the subframe of the first base station includes one or more downstream symbols but no upstream symbol, configuring, by the second base station, each of the upstream symbols in the subframe of the second base station as the blank symbol.

The method further includes: in the case that the symbol configuration information of the first base station does not include all symbol configuration information in the subframe of the first base station, determining, by the second base station, a position of a target symbol and configuring, by the second base station, an upstream symbol corresponding to the position of the target symbol in the subframe of the second base station as the blank symbol. The target symbol is a symbol that is not included in the symbol configuration information in the subframe of the first base station. All symbol configuration information in the subframe may include configuration information about all symbols in the subframe.

In a possible implementation, the method may further include: in the case that the symbol configuration information of the second base station includes an unspecified symbol and the symbol configuration information of the first base station does not include an unspecified symbol, configuring, by the second base station, the unspecified symbol at a position corresponding to a downstream symbol of the first base station as the blank symbol; or in the case that the symbol configuration information of the first base station includes an unspecified symbol and the symbol configuration information of the second base station does not include an unspecified symbol, determining, by the second base station, a position of the unspecified symbol, and configuring, by the second base station, an upstream symbol corresponding to the position of the unspecified symbol in the subframe of the second base station as the blank symbol; or in the case that both the symbol configuration information of the second base station and the first base station includes an unspecified symbol, configuring, by the second base station, the unspecified symbol of the second base station at a position corresponding to a downstream symbol of the first base station as the blank symbol, determining, by the second base station, an upstream symbol at a position corresponding to the unspecified symbol of the first base station in the subframe of the second station, and configuring, by the second base station, the upstream symbol at the corresponding position as the blank symbol.

In a possible implementation, the method may include: transmitting, by the second base station, first symbol configuration information to user equipment (UE), such that the UE does not communicate on the blank symbol; or transmitting, by the second base station, second symbol configuration information to user equipment (UE), such that the UE communicates on the blank symbol with a predetermined power.

In a possible implementation, the first base station is a micro base station within coverage of the second base station; or the first base station is a macro base station having overlap coverage with the second base station; or the first base station is adjacent to the second base station.

All the optional technical solutions described above may form alternative embodiments of the present disclosure in any combinations, which will not be unnecessarily detailed herein.

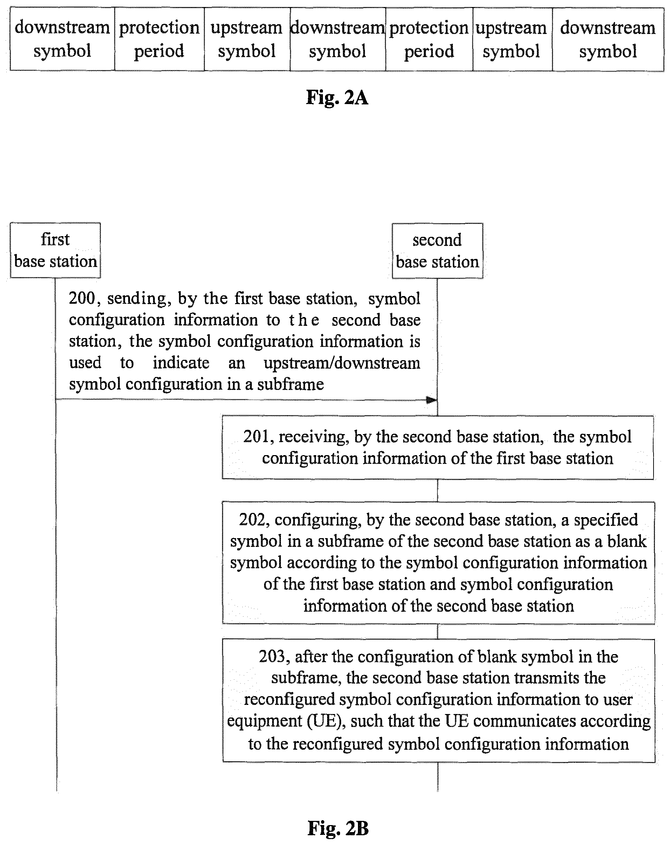

Fig. 2A is a schematic diagram of a subframe format illustrated according to an exemplary embodiment. As shown in Fig. 2A, a subframe may include but is not limited to one or more upstream symbols and downstream symbols. A base station may perform upstream communication on the upstream symbols and perform downstream communication on the downstream symbols.

Additionally, when a base station is switched from downstream communication to upstream communication, there is a protection period to avoid interference on upstream communication of the base station from downstream communication of an associated base station.

Fig. 2B is a flow diagram of a communication method illustrated according to an exemplary embodiment. As shown in Fig. 2B, the communication method may be applied to a base station. The communication method may include the following steps.

In step 200, a first base station sends symbol configuration information to a second base station. The symbol configuration information is used to indicate an upstream/downstream symbol configuration in a subframe.

In embodiments of the present disclosure, the first base station is associated with the second base station. When the second station is a macro station, the first base station may be a micro base station within coverage of the second base station. When the second station is a micro station, the first base station may be a macro base station having overlap coverage with the second base station. Further, the first base station may be adjacent to the second base station. Embodiments of the present disclosure are not limited herein.

The symbol configuration information may include but is not limited to a category (such as, an upstream symbol, a downstream symbol), a position of a symbol in the subframe and a position of a protection period in the subframe.

In practice, a provider may decide whether the second base station should avoid interference on the first base station according to a degree of the interference on the first base station or a decision on business requirement. If so, the first base station sends the symbol configuration information to the second base station. There may be three cases as follows. Embodiments of the present disclosure are not limited herein.

For example, after establishment of the first base station, it may send the symbol configuration information to the second base station.

For example, the second base station may start to interfere the first base station or keep interfering the first base station, after the symbol configuration information of the first station changes. Thereby, in another embodiment of the present disclosure, the first base station may send the symbol configuration information to the second base station after a change of the symbol configuration information.

For example, after a change of business requirement of the first base station, the operator may decide that the second base station should avoid interference on the first base station. Thereby, in another embodiment of the present disclosure, the first base station may send the symbol configuration information to the second base station after a change of business requirement. In step 201, the second base station receives the symbol configuration information of the first base station.

It is to be noted that the first base station and the second base station are geographically located closely to each other and thus upstream communication of the second base station and downstream communication of the first base station may be performed in the same subframe.

Since the upstream communication of the second base station and downstream communication of the first base station may interfere the downstream communication of the first base station, the second base station may avoid the interference based on the situation. In practice, the second base station may determine whether to avoid the interference according to its communication situation or the communication requirement of the first base station, which is not limited herein. If the avoidance is needed, the method proceeds to step 202. If the avoidance is not needed, the method ends. For example, in the case that communication efficiency of the second base station is poor or the communication requirement of the first base station is low during a certain period, the second base station does not need to avoid the interference, and then step 202 may not be performed.

In step 202, the second base station configures a specified symbol in a subframe of the second base station as a blank symbol according to the symbol configuration information of the first base station and symbol configuration information of the second base station. The specified symbol is a symbol that is predicted to cause interference during communication.

It is to be noted that based on the symbol configuration information of the first base station and symbol configuration information of the second base station, the second base station may be aware of particular configuration of the subframes of both the base stations (for example, a position of an upstream/downstream symbol), and then determine an overlap part of one or more upstream symbols of the second base station and one or more downstream symbols of the first base station. An upstream symbol in the overlap part may be taken as the specified symbol which is predicted to cause interference during communication.

In embodiments of the disclosure, in the case that the received symbol configuration information of the first base station includes all symbol configuration information in the subframe of the first base station. For example, the subframe as shown in Fig. 2A includes all symbol configuration information in the subframe, i.e., each symbol position in the subframe has a corresponding upstream symbol, downstream symbol or protection period. According to the interference situation, in order to avoid that upstream communication of the second base station may disturb downstream communication of the first base station, there may be at least three ways to configure the blank symbol.

As the first way, in the case that the subframes of both the first base station and the second base station include one or more upstream symbols and downstream symbols, an overlap position of the one or more upstream symbols of the second base station and the one or more downstream symbols of the first base station may be determined, and an upstream symbol at the overlap position is configured as the blank symbol.

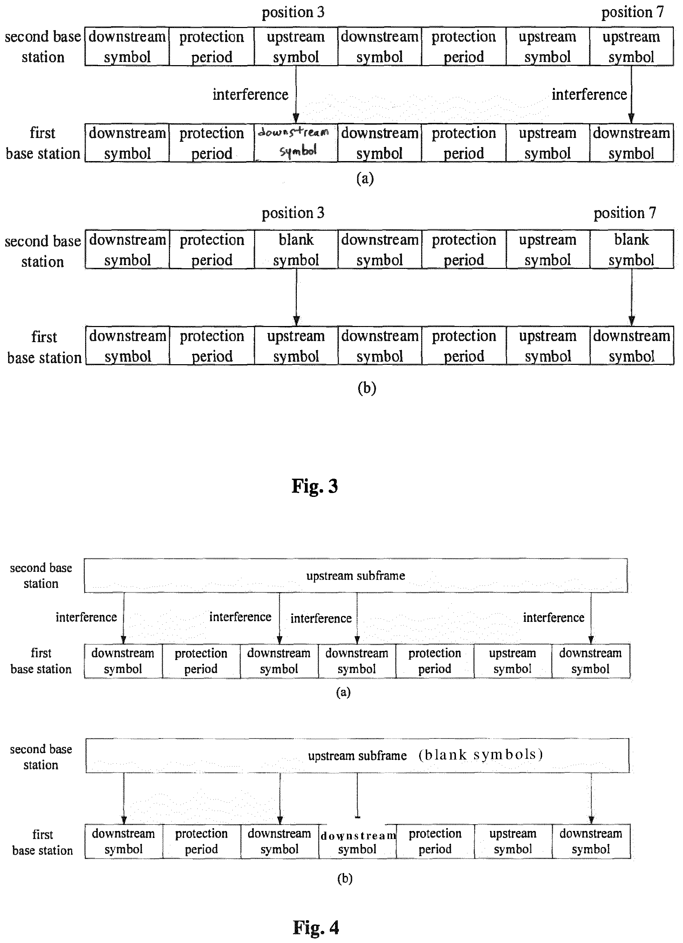

For example, Fig. 3 is a schematic diagram of a configuration of blank symbol illustrated according to an exemplary embodiment. As shown in (a) of Fig. 3, before configuration of the blank symbol, upstream symbols of the second base station and downstream symbols of the first base station are overlapped at positions 3 and 7. As a result, when communicating on the upstream symbols of the positions 3 and 7, the second base station may interfere downstream communication of the first base station. Therefore, as shown in (b) of Fig. 3, the upstream symbols of the overlapped part are configured as blank symbols, in order to avoid the interference.

As the second way, in the case that the subframe of the first base station includes one or more upstream symbols and downstream symbols and the subframe of the second base station includes one or more upstream symbols but no downstream symbol, each of the upstream symbols in the subframe of the second base station is configured as the blank symbol.

For example, Fig. 4 is a schematic diagram of a configuration of blank symbol illustrated according to an exemplary embodiment. As shown in (a) of Fig. 4, before configuration of the blank symbol, communication on the upstream symbols of the second base station may interfere communication on downstream symbols of the first base station. Therefore, as shown in (b) of Fig. 4, all upstream symbols of the second base station are configured as blank symbols, in order to avoid the interference.

As the third way, in the case that the subframe of the second base station includes one or more upstream symbols and downstream symbols and the subframe of the first base station includes one or more downstream symbols but no upstream symbol, each of the upstream symbols in the subframe of the second base station as the blank symbol is configured as the blank symbol.

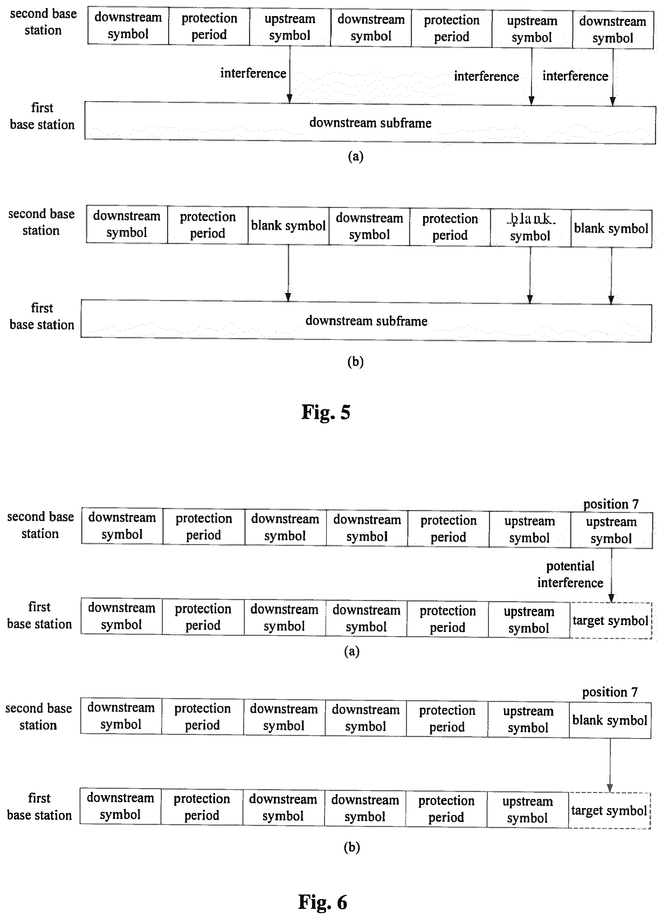

For example, Fig. 5 is a schematic diagram of a configuration of blank symbol illustrated according to an exemplary embodiment. As shown in (a) of Fig. 5, before configuration of the blank symbol, communication on each of the upstream symbols of the second base station may interfere communication on a corresponding downstream symbol of the first base station. Therefore, as shown in (b) of Fig. 5, all upstream symbols of the second base station are configured as blank symbols, in order to avoid the interference.

In practice, the received symbol configuration information of a first base station may not include all configuration information about symbols in the subframe. Since symbol configuration information is unknown, a target symbol may be an upstream symbol. In this situation, when a symbol at the position corresponding to the target symbol in the subframe of the second base station is an upstream symbol, interference may occur. The target symbol is a symbol included in the subframe of the first station and except for symbols included in the symbol configuration information.

For example, Fig. 6 is a schematic diagram of a configuration of blank symbol illustrated according to an exemplary embodiment. As shown in (a) of Fig. 6, there is a target symbol at the symbol position 7 of the subframe of the first base station. In order to avoid potential interference on communication on the target symbol of the first base station, as shown in (b) of Fig. 6, the position of the target symbol is determined, and the upstream symbol at the position corresponding to the target symbol in the subframe of the second base station is configured as the blank symbol.

Taking the case that the subframe includes an unspecified symbol into consideration, the second station cannot determine an actual configuration of the unspecified symbol before communication, since the unspecified symbol may be an upstream symbol or a downstream symbol during practical communication. Therefore, either in the case that an unspecified symbol of the second base station is an upstream symbol or in the case that an unspecified symbol of the first base station is a downstream symbol, the second base station my disturb the first base station's communication. Thereby, in embodiments of the disclosure, there may be at least three ways to configure the blank symbol, in order to avoid the potential interference.

As the fourth way, in the case that the symbol configuration information of the second base station includes an unspecified symbol and the symbol configuration information of the first base station does not include an unspecified symbol, the unspecified symbol at a position corresponding to a downstream symbol of the first base station is configured as the blank symbol.

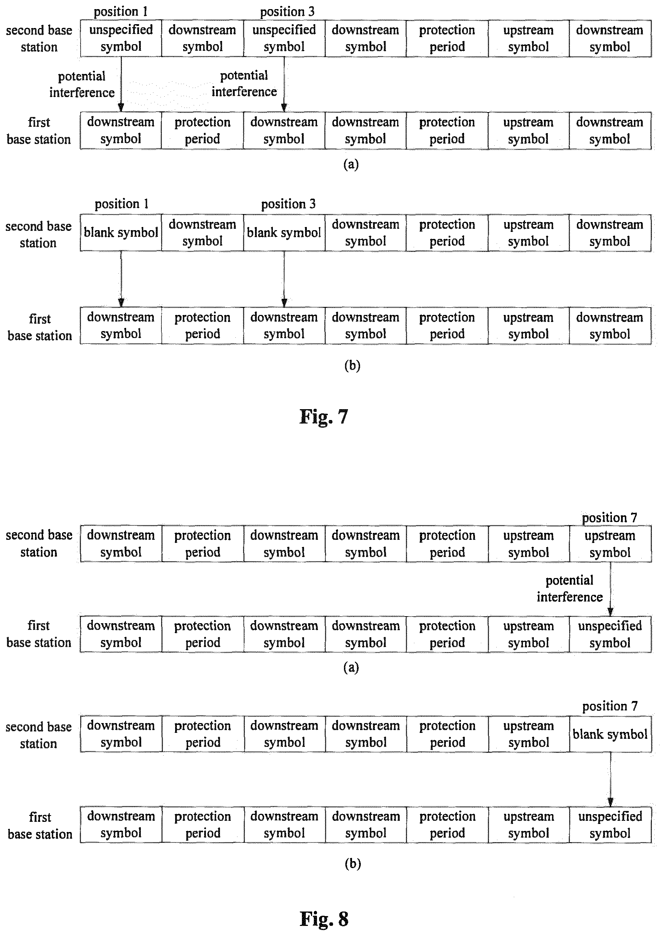

For example, Fig. 7 is a schematic diagram of a configuration of blank symbol illustrated according to an exemplary embodiment. As shown in (a) of Fig. 7, there are unspecified symbols at the symbol positions 1 and 3 of the subframe of the second base station. In order to avoid interference on communication on positions of the first base station corresponding to the unspecified symbols when the second base station performs upstream communication on the unspecified symbols, as shown in (b) of Fig. 7, the unspecified symbols are configured as blank symbols.

As the fifth way, in the case that the symbol configuration information of the first base station includes an unspecified symbol and the symbol configuration information of the second base station does not include an unspecified symbol, a position of the unspecified symbol is determined, and an upstream symbol corresponding to the position of the unspecified symbol in the subframe of the second base station is configured as the blank symbol.

For example, Fig. 8 is a schematic diagram of a configuration of blank symbol illustrated according to an exemplary embodiment. As shown in (a) of Fig. 8, there is an unspecified symbol at the symbol position 7 of the subframe of the first base station. If downstream communication is performed on the unspecified symbol, as shown in (b) of Fig. 8, in order to avoid interference from upstream communication of the second base station on an upstream symbol corresponding to the unspecified symbol, the upstream symbol at the symbol position 7 of the subframe of the second base station is configured as the blank symbol.

As the sixth way, in the case that both the symbol configuration information of the second base station and the first base station includes an unspecified symbol, configuring, by the second base station, the unspecified symbol of the second base station at a position corresponding to a downstream symbol of the first base station is configured as the blank symbol; and an upstream symbol at a position corresponding to the unspecified symbol of the first base station in the subframe of the second station is determined and the upstream symbol at the corresponding position is configured as the blank symbol.

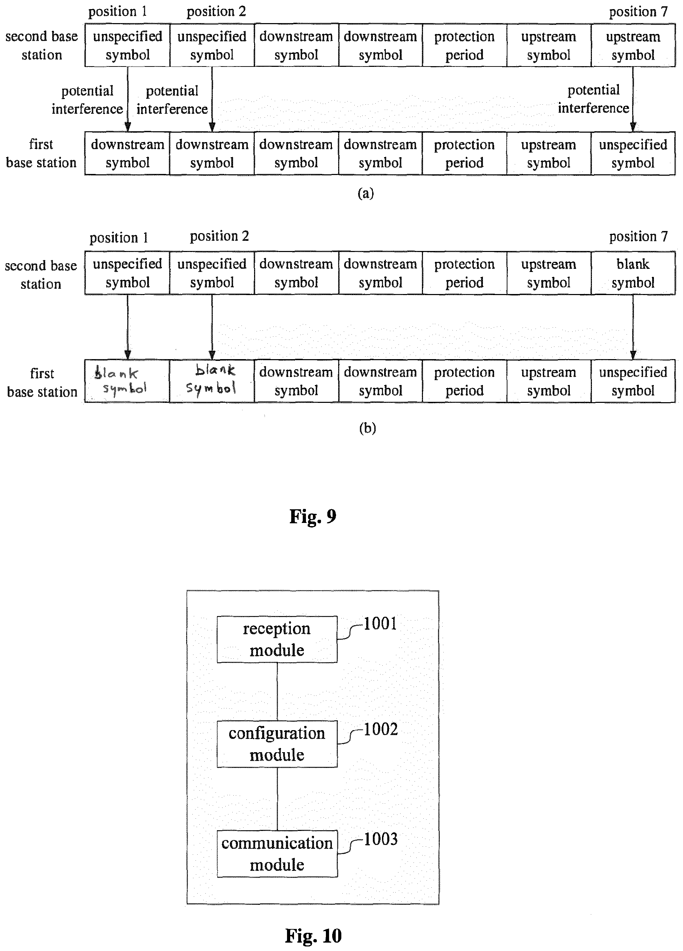

For example, Fig. 9 is a schematic diagram of a configuration of blank symbol illustrated according to an exemplary embodiment. As shown in (a) of Fig. 9, there are unspecified symbols at the symbol positions 1 and 2 of the subframe of the second base station. In order to avoid interference on communication on positions 1 and 2 of the first base station, the unspecified symbols at the symbol positions 1 and 2 of the subframe of the second base station are configured as blank symbols. Further, there is an unspecified symbol at the symbol position 7 of the subframe of the first base station. In order to avoid interference when upstream communication is performed on the upstream symbol at the symbol position 7 of the subframe of the second base station, as shown in (b) of Fig. 9, the upstream symbol at the symbol position 7 is configured as the blank symbol.

In step 203, after the configuration of blank symbol in the subframe, the second base station transmits the reconfigured symbol configuration information to user equipment (UE), such that the UE communicates according to the reconfigured symbol configuration information. In an embodiment of the present disclosure, the reconfigured symbol configuration information may be first symbol configuration information. In the case that the second base station transmits the first symbol configuration information to the UE, the UE does not communicate on the blank symbol and performs upstream communication on other symbols except for the blank symbol, so as to avoid interference on the first base station's communication.

In order to ensure communication efficiency of the second base station while avoiding interference on the first base station, in another embodiment of the present disclosure, the reconfigured symbol configuration information may be second symbol configuration information which carries a predetermined power for the UE limited by the second base station. For example, the predetermined power may be 50% of the original power, which is not limited herein. In the case that the second base station transmits the second symbol configuration information to the UE, the UE communicates on the blank symbol with the predetermined power, and communicates normally on other symbols except for the blank symbol.

In related arts, a macro base station configures a whole subframe as a blank subframe, in order to avoid interference on downstream communication of an associated base station. The manner in which the whole subframe is configured as the blank subframe not only wastes subframe resources but also delays communication progress of the second base station. As a result, communication efficiency of the second base station is very low.

Embodiments of the present disclosure avoid interference on the communication of the first base station on downstream symbols by configuring a symbol that is predicted to cause interference during the communication of the second base station as a blank symbol. Since a symbol is a smaller time span within a subframe, as compared with related arts, the approach to configure a blank symbol may not only save subframe resources, but also would not cause too much delay in a communication progress of the second base station. Therefore, communication efficiency is improved.

Additionally, the second base station enables UE to communicate with the predetermined power, so as to ensure communication efficiency of the second base station, while avoiding interference on the first base station.

Fig. 10 is a block diagram of a communication apparatus illustrated according to an exemplary embodiment. As shown in Fig. 10, the communication apparatus may be applied to a second base station. The communication apparatus may include a reception module 1001, a configuration module 1002 and a communication module 1003.

The reception module 1001 is configured to receive symbol configuration information of a first base station. The symbol configuration information is used to indicate an upstream/downstream symbol configuration in a subframe.

The configuration module 1002 is configured to configure a specified symbol in a subframe of the second base station as a blank symbol, according to the symbol configuration information of the first base station and symbol configuration information of the second base station. The specified symbol is a symbol that is predicted to cause interference during communication.

The communication module 1003 is configured to communicate according to reconfigured symbol configuration information
In a possible implementation, the reception module 1001 is configured to: receive the symbol configuration information sent by the first base station after establishment of the second base station; or receive the symbol configuration information sent by the first base station after a change of symbol configuration information; or receive the symbol configuration information sent by the first base station after a change of business requirement.

In a possible implementation, the configuration module 1002 is configured to: in the case that the subframes of both the first base station and the second base station include one or more upstream symbols and downstream symbols, determine an overlap position of the one or more upstream symbols of the second base station and the one or more downstream symbols of the first base station and configure an upstream symbol at the overlap position as the blank symbol; or in the case that the subframe of the first base station includes one or more upstream symbols and downstream symbols and the subframe of the second base station includes one or more upstream symbols but no downstream symbol, configure each of the upstream symbols in the subframe of the second base station as the blank symbol; or in the case that the subframe of the second base station includes one or more upstream symbols and downstream symbols and the subframe of the first base station includes one or more downstream symbols but no upstream symbol, configure each of the upstream symbols in the subframe of the second base station as the blank symbol.

The configuration module 1002 is further configured to: in the case that the symbol configuration information of the first base station does not include all symbol configuration information in the subframe of the first base station, determine a position of a target symbol and configure an upstream symbol corresponding to the position of the target symbol in the subframe of the second base station as the blank symbol. The target symbol is a symbol that is not included in the symbol configuration information in the subframe of the first base station.

In a possible implementation, the configuration module 1002 is further configured to: in the case that the symbol configuration information of the second base station includes an unspecified symbol and the symbol configuration information of the first base station does not include an unspecified symbol, configure the unspecified symbol at a position corresponding to a downstream symbol of the first base station as the blank symbol; or in the case that the symbol configuration information of the first base station includes an unspecified symbol and the symbol configuration information of the second base station does not include an unspecified symbol, determine a position of the unspecified symbol and configure an upstream symbol corresponding to the position of the unspecified symbol in the subframe of the second base station as the blank symbol; or in the case that both the symbol configuration information of the second base station and the first base station include an unspecified symbol, configure the unspecified symbol of the second base station at a position corresponding to a downstream symbol of the first base station as the blank symbol, determine an upstream symbol at a position corresponding to the unspecified symbol of the first base station in the subframe of the second station, and configure the upstream symbol at the corresponding position as the blank symbol.

In a possible implementation, the communication module 1003 is configured to: transmit first symbol configuration information to user equipment (UE), such that the UE does not communicate on the blank symbol; or transmit second symbol configuration information to user equipment (UE), such that the UE communicates on the blank symbol with a predetermined power.

In a possible implementation, the first base station is a micro base station within coverage of the second base station; or the first base station is a macro base station having overlap coverage with the second base station; or the first base station is adjacent to the second base station.

In related arts, a macro base station configures a whole subframe as a blank subframe, in order to avoid interference on downstream communication of an associated base station. The manner in which the whole subframe is configured as the blank subframe not only wastes subframe resources but also delays communication progress of the second base station. As a result, communication efficiency of the second base station is very low.

Embodiments of the present disclosure avoid interference on the communication of the first base station on downstream symbols by configuring a symbol that is predicted to cause interference during the communication of the second base station as a blank symbol. Since a symbol is a smaller time span within a subframe, as compared with related arts, the approach to configure a blank symbol may not only save subframe resources, but also would not cause too much delay in a communication progress of the second base station. Therefore, communication efficiency is improved.

Additionally, the second base station enables UE to communicate with the predetermined power, so as to ensure communication efficiency of the second base station, while avoiding interference on the first base station.

Regarding the apparatus described in the above embodiments, particular ways for by which each of the modules performs corresponding operations are described in details in the related method embodiments, which will not be detailed herein.

Embodiments of the disclosure further provide apparatus embodiments for implementing the steps and method of the above method embodiments. Embodiments of the present disclosure may be applied to a base station in various communication systems.

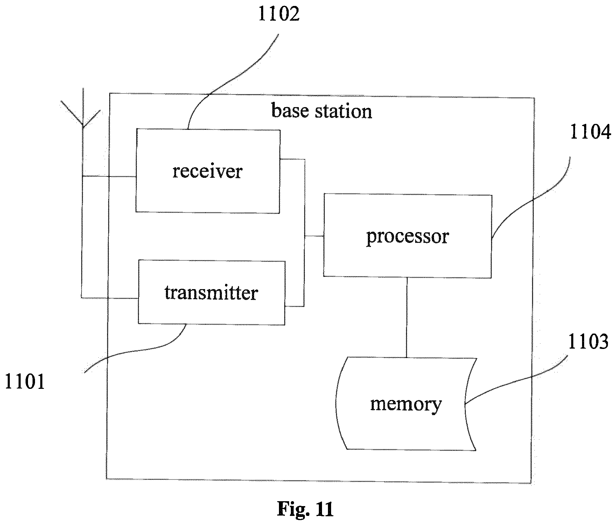

Referring to Fig. 11, Fig. 11 is a structure diagram of an implementation possibility of any of the base stations discussed above. As shown, the base station may include a transmitter 1101, a receiver 1102, a memory 1103 and a processor 1104 connected with the transmitter 1101, receiver 1102 and memory 1103 respectively. Certainly, the base station may also include universal components, such as, an antenna, a baseband processing component, an intermediate frequency processing component, input/output (I/O) means and so on. Embodiments of the present disclosure are not limited herein.

The processor is configured to perform a method according to any of the potential implementations provided by the above embodiments.

The scope of the present invention is determined and limited only by the scope of the appended claims.

## Claims

1. A communication method applied to a second base station, comprising:
receiving (101), by the second base station, symbol configuration information of a first base station, wherein the symbol configuration information is used to indicate an upstream/downstream symbol configuration in a subframe of the first base station;
configuring (102), by the second base station, a specified symbol in a subframe of the second base station as a blank symbol according to the symbol configuration information of the first base station and symbol configuration information of the second base station, in which the specified symbol is a symbol that is predicted to cause interference on the subframe of the first base station during communication, so as to reconfigure the symbol configuration information of the second base station; and
communicating (103), by the second base station, according to the reconfigured symbol configuration information;
**characterized in that**, the method further comprises:
in the case that the symbol configuration information of the first base station does not comprise all symbol configuration information in the subframe of the first base station, determining, by the second base station, a position of a target symbol and configuring, by the second base station, an upstream symbol corresponding to the position of the target symbol in the subframe of the second base station as the blank symbol, wherein the target symbol is a symbol that is not included in the symbol configuration information in the subframe of the first base station.

2. The method of claim 1, wherein the receiving (101), by the second base station, the symbol configuration information of the first base station comprises:
receiving, by the second base station, the symbol configuration information sent by the first base station after establishment of the second base station; or
receiving, by the second base station, the symbol configuration information sent by the first base station after a change of symbol configuration information.

3. The method of claim 1, wherein the configuring (102), by the second base station, the specified symbol in the subframe of the second base station as the blank symbol, according to the symbol configuration information of the first base station and the symbol configuration information of the second base station comprises:
in the case that the subframes of both the first base station and the second base station comprise one or more upstream symbols and downstream symbols, determining, by the second base station, an overlap position of the one or more upstream symbols of the second base station and the one or more downstream symbols of the first base station, and configuring, by the second base station, each upstream symbol at the overlap position as the blank symbol; or
in the case that the subframe of the first base station comprises one or more upstream symbols and downstream symbols and the subframe of the second base station comprises one or more upstream symbols but no downstream symbol, configuring, by the second base station, each of the upstream symbols in the subframe of the second base station as the blank symbol; or
in the case that the subframe of the second base station comprises one or more upstream symbols and downstream symbols and the subframe of the first base station comprises one or more downstream symbols but no upstream symbol, configuring, by the second base station, each of the upstream symbols in the subframe of the second base station as the blank symbol.

4. The method of claim 3, further comprising:
in the case that the symbol configuration information of the second base station includes an unspecified symbol and the symbol configuration information of the first base station does not include an unspecified symbol, configuring, by the second base station, the unspecified symbol at a position corresponding to a downstream symbol of the first base station as the blank symbol; or
in the case that the symbol configuration information of the first base station includes an unspecified symbol and the symbol configuration information of the second base station does not include an unspecified symbol, determining, by the second base station, a position of the unspecified symbol, and configuring, by the second base station, an upstream symbol corresponding to the position of the unspecified symbol in the subframe of the second base station as the blank symbol; or
in the case that both the symbol configuration information of the second base station and the first base station includes an unspecified symbol, configuring, by the second base station, the unspecified symbol of the second base station at a position corresponding to a downstream symbol of the first base station as the blank symbol, determining, by the second base station, an upstream symbol at a position corresponding to the unspecified symbol of the first base station in the subframe of the second station, and configuring, by the second base station, the upstream symbol at the corresponding position as the blank symbol.

5. The method of claim 1, wherein the communicating (103), by the second base station, according to the reconfigured symbol configuration information comprises:
transmitting, by the second base station, first symbol configuration information to user equipment, UE, such that the UE does not communicate on the blank symbol; or
transmitting, by the second base station, second symbol configuration information to a user equipment, UE, such that the UE communicates on the blank symbol with a predetermined power.

6. The method of claim 1, wherein the first base station is a micro base station within coverage of the second base station; or the first base station is a macro base station having overlap coverage with the second base station; or the first base station is adjacent to the second base station.

7. A communication apparatus applied to a second base station, comprising:
a reception module (1001), for receiving symbol configuration information of a first base station, wherein the symbol configuration information is used to indicate an upstream/downstream symbol configuration in a subframe of the first base station;
a configuration module (1002), for configuring a specified symbol in a subframe of the second base station as a blank symbol, according to the symbol configuration information of the first base station and symbol configuration information of the second base station to reconfigure the symbol configuration information of the second base station, wherein the specified symbol is a symbol that is predicted to cause interference on the subframe of the first base station during communication; and
a communication module (1003), for communicating according to the reconfigured symbol configuration information;
**characterized in that**, the configuration module (1002) is further configured to:
in the case that the symbol configuration information of the first base station does not include all symbol configuration information in the subframe of the first base station, determine a position of a target symbol and configure an upstream symbol corresponding to the position of the target symbol in the subframe of the second base station as the blank symbol, wherein the target symbol is a symbol that is not included in the symbol configuration information in the subframe of the first base station.

8. The apparatus of claim 7, wherein the reception module (1001) is configured to:
receive the symbol configuration information sent by the first base station after establishment of the second base station; or
receive the symbol configuration information sent by the first base station after a change of symbol configuration information.

9. The apparatus of claim 7, wherein the configuration module (1002) is further configured to:
in the case that the subframes of both the first base station and the second base station comprise one or more upstream symbols and downstream symbols, determine an overlap position of the one or more upstream symbols of the second base station and the one or more downstream symbols of the first base station and configure each upstream symbol at the overlap position as the blank symbol; or
in the case that the subframe of the first base station comprises one or more upstream symbols and downstream symbols and the subframe of the second base station comprises one or more upstream symbols but no downstream symbol, configure each of the upstream symbols in the subframe of the second base station as the blank symbol; or
in the case that the subframe of the second base station comprises one or more upstream symbols and downstream symbols and the subframe of the first base station comprises one or more downstream symbols but no upstream symbol, configure each of the upstream symbols in the subframe of the second base station as the blank symbol.

10. The apparatus of claim 9, wherein the configuration module (1002) is further configured to:
in the case that the symbol configuration information of the second base station includes an unspecified symbol and the symbol configuration information of the first base station does not include an unspecified symbol, configure the unspecified symbol at a position corresponding to a downstream symbol of the first base station as the blank symbol; or
in the case that the symbol configuration information of the first base station includes an unspecified symbol and the symbol configuration information of the second base station does not include an unspecified symbol, determine a position of the unspecified symbol and configure an upstream symbol corresponding to the position of the unspecified symbol in the subframe of the second base station as the blank symbol; or
in the case that both the symbol configuration information of the second base station and the first base station include an unspecified symbol, configure the unspecified symbol of the second base station at a position corresponding to a downstream symbol of the first base station as the blank symbol, determine an upstream symbol at a position corresponding to the unspecified symbol of the first base station in the subframe of the second station, and configure the upstream symbol at the corresponding position as the blank symbol.

11. The apparatus of claim 7, wherein the communication module (1003) is configured to:
transmit first symbol configuration information to user equipment, UE, such that the UE does not communicate on the blank symbol; or
transmit second symbol configuration information to user equipment, UE, such that the UE communicates on the blank symbol with a predetermined power.

12. The apparatus of claim 7, wherein the first base station is a micro base station within coverage of the second base station; or the first base station is a macro base station having overlap coverage with the second base station; or the first base station is adjacent to the second base station.

13. A computer program comprising instructions which, when the program is executed by a computer, cause the computer to carry out the method of any one of claims 1 to 6.

## Patentansprüche

1. Kommunikationsverfahren, das auf eine zweite Basisstation angewendet wird, umfassend:
Empfangen (101) von Symbolkonfigurationsinformationen einer ersten Basisstation durch die zweite Basisstation, wobei die Symbolkonfigurationsinformationen verwendet werden, um eine Upstream/Downstream-Symbolkonfiguration in einem Teilrahmen anzuzeigen,
Konfigurieren (102), durch die zweite Basisstation, eines spezifizierten Symbols in einem Teilrahmen der zweiten Basisstation als ein Leersymbol gemäß den Symbolkonfigurationsinformationen der ersten Basisstation und den Symbolkonfigurationsinformationen der zweiten Basisstation, wobei das spezifizierte Symbol ein Symbol ist, von dem vorhergesagt wird, dass es während der Kommunikation Störungen an dem Teilrahmen der ersten Basisstation verursacht, um die Symbolkonfigurationsinformationen der zweiten Basisstation neu zu konfigurieren, und
Kommunikation (103) durch die zweite Basisstation gemäß der neu konfigurierten Symbolkonfigurationsinformation,
**dadurch gekennzeichnet, dass** das Verfahren ferner umfasst:
in dem Fall, dass die Symbolkonfigurationsinformationen der ersten Basisstation nicht alle Symbolkonfigurationsinformationen in dem Teilrahmen der ersten Basisstation umfassen, Bestimmen, durch die zweite Basisstation, einer Position eines Zielsymbols und Konfigurieren, durch die zweite Basisstation, eines Upstream-Symbols, das der Position des Zielsymbols in dem Teilrahmen der zweiten Basisstation entspricht, als das Leersymbol, wobei das Zielsymbol ein Symbol ist, das nicht in den Symbolkonfigurationsinformationen in dem Teilrahmen der ersten Basisstation enthalten ist.

2. Verfahren nach Anspruch 1, wobei das Empfangen (101) der Symbolkonfigurationsinformationen der ersten Basisstation durch die zweite Basisstation umfasst:
Empfangen der von der ersten Basisstation gesendeten Symbolkonfigurationsinformationen durch die zweite Basisstation nach Einrichtung der zweiten Basisstation, oder
Empfangen der von der ersten Basisstation gesendeten Symbolkonfigurationsinformationen durch die zweite Basisstation nach einer Änderung der Symbolkonfigurationsinformationen.

3. Verfahren nach Anspruch 1, wobei das Konfigurieren (102), durch die zweite Basisstation, des spezifizierten Symbols in dem Teilrahmen der zweiten Basisstation als das Leersymbol, gemäß den Symbolkonfigurationsinformationen der ersten Basisstation und den Symbolkonfigurationsinformationen der zweiten Basisstation umfasst:
in dem Fall, dass die Teilrahmen sowohl der ersten Basisstation als auch der zweiten Basisstation ein oder mehrere Upstream-Symbole und Downstream-Symbole umfassen, Bestimmen einer Überlappungsposition des einen oder der mehreren Upstream-Symbole der zweiten Basisstation und des einen oder der mehreren Downstream-Symbole der ersten Basisstation durch die zweite Basisstation, und Konfigurieren jedes Upstream-Symbols an der Überlappungsposition als das Leersymbol durch die zweite Basisstation, oder
in dem Fall, dass der Teilrahmen der ersten Basisstation ein oder mehrere Upstream-Symbole und Downstream-Symbole umfasst und der Teilrahmen der zweiten Basisstation ein oder mehrere Upstream-Symbole, aber kein Downstream-Symbol umfasst, Konfigurieren jedes der Upstream-Symbole in dem Teilrahmen der zweiten Basisstation als das Leersymbol durch die zweite Basisstation, oder
in dem Fall, dass der Teilrahmen der zweiten Basisstation ein oder mehrere Upstream-Symbole und Downstream-Symbole umfasst und der Teilrahmen der ersten Basisstation ein oder mehrere Downstream-Symbole, aber kein Upstream-Symbol umfasst, Konfigurieren jedes der Upstream-Symbole in dem Teilrahmen der zweiten Basisstation als das Leersymbol durch die zweite Basisstation.

4. Verfahren nach Anspruch 3, ferner umfassend:
in dem Fall, dass die Symbolkonfigurationsinformationen der zweiten Basisstation ein nicht spezifiziertes Symbol enthalten und die Symbolkonfigurationsinformationen der ersten Basisstation kein nicht spezifiziertes Symbol enthalten, Konfigurieren des nicht spezifizierten Symbols durch die zweite Basisstation an einer Position, die einem Downstream-Symbol der ersten Basisstation entspricht, als das Leersymbol, oder
in dem Fall, dass die Symbolkonfigurationsinformationen der ersten Basisstation ein nicht spezifiziertes Symbol enthalten und die Symbolkonfigurationsinformationen der zweiten Basisstation kein nicht spezifiziertes Symbol enthalten, Bestimmen einer Position des nicht spezifizierten Symbols durch die zweite Basisstation und Konfigurieren eines Upstream-Symbols, das der Position des nicht spezifizierten Symbols in dem Teilrahmen der zweiten Basisstation entspricht, als das Leersymbol durch die zweite Basisstation, oder
in dem Fall, dass sowohl die Symbolkonfigurationsinformationen der zweiten Basisstation als auch der ersten Basisstation ein nicht spezifiziertes Symbol enthalten, Konfigurieren des nicht spezifizierten Symbols der zweiten Basisstation durch die zweite Basisstation an einer Position, die einem Downstream-Symbol der ersten Basisstation entspricht, als das Leersymbol, Bestimmen eines Upstream-Symbols durch die zweite Basisstation an einer Position, die dem nicht spezifizierten Symbol der ersten Basisstation in dem Teilrahmen der zweiten Station entspricht, und Konfigurieren des Upstream-Symbols durch die zweite Basisstation an der entsprechenden Position als das Leersymbol.

5. Verfahren nach Anspruch 1, wobei das Kommunizieren (103) durch die zweite Basisstation gemäß den neu konfigurierten Symbolkonfigurationsinformationen umfasst:
Übertragen von ersten Symbolkonfigurationsinformationen durch die zweite Basisstation an das Benutzergerät, UE, so dass das UE nicht auf dem Leersymbol kommuniziert, oder
Übertragen, durch die zweite Basisstation, von zweiten Symbolkonfigurationsinformationen an ein Benutzergerät, UE, so dass das UE auf dem Leersymbol mit einer vorbestimmten Leistung kommuniziert.

6. Verfahren nach Anspruch 1, wobei die erste Basisstation eine Mikro-Basisstation innerhalb der Abdeckung der zweiten Basisstation ist, oder die erste Basisstation eine Makro-Basisstation ist, die eine Überlappungsabdeckung mit der zweiten Basisstation hat, oder die erste Basisstation benachbart zu der zweiten Basisstation ist.

7. Kommunikationsgerät, das auf eine zweite Basisstation angewendet wird, umfassend:
ein Empfangsmodul (1001) zum Empfangen von Symbolkonfigurationsinformationen einer ersten Basisstation, wobei die Symbolkonfigurationsinformationen verwendet werden, um eine Upstream/Downstream-Symbolkonfiguration in einem Teilrahmen der ersten Basisstation anzuzeigen,
ein Konfigurationsmodul (1002) zum Konfigurieren eines spezifizierten Symbols in einem Teilrahmen der zweiten Basisstation als ein Leersymbol, gemäß den Symbolkonfigurationsinformationen der ersten Basisstation und den Symbolkonfigurationsinformationen der zweiten Basisstation, um die Symbolkonfigurationsinformationen der zweiten Basisstation neu zu konfigurieren, wobei das spezifizierte Symbol ein Symbol ist, von dem vorhergesagt wird, dass es während der Kommunikation an dem Teilrahmen der ersten Basisstation Störungen verursacht, und
ein Kommunikationsmodul (1003), um entsprechend der neu konfigurierten Symbolkonfigurationsinformationen zu kommunizieren,
**dadurch gekennzeichnet, dass** das Konfigurationsmodul (1002) ferner dazu konfiguriert ist,
in dem Fall, dass die Symbolkonfigurationsinformationen der ersten Basisstation nicht alle Symbolkonfigurationsinformationen in dem Teilrahmen der ersten Basisstation enthalten, eine Position eines Zielsymbols zu bestimmen und ein Upstream-Symbols, das der Position des Zielsymbols in dem Teilrahmen der zweiten Basisstation entspricht, als das Leersymbol zu konfigurieren, wobei das Zielsymbol ein Symbol ist, das nicht in den Symbolkonfigurationsinformationen in dem Teilrahmen der ersten Basisstation enthalten ist.

8. Vorrichtung nach Anspruch 7, wobei das Empfangsmodul (1001) dazu konfiguriert ist:
die von der ersten Basisstation gesendeten Symbolkonfigurationsinformationen nach Einrichtung der zweiten Basisstation zu empfangen, oder
die von der ersten Basisstation gesendeten Symbolkonfigurationsinformationen nach einer Änderung der Symbolkonfigurationsinformationen zu empfangen.

9. Vorrichtung nach Anspruch 7, wobei das Konfigurationsmodul (1002) ferner dazu konfiguriert ist,
in dem Fall, dass die Teilrahmen sowohl der ersten Basisstation als auch der zweiten Basisstation ein oder mehrere Upstream-Symbole und Downstream-Symbole umfassen, eine Überlappungsposition des einen oder der mehreren Upstream-Symbole der zweiten Basisstation und des einen oder der mehreren Downstream-Symbole der ersten Basisstation zu bestimmen und jedes Upstream-Symbol an der Überlappungsposition als das Leersymbol zu konfigurieren, oder
in dem Fall, dass der Teilrahmen der ersten Basisstation ein oder mehrere Upstream-Symbole und Downstream-Symbole umfasst und der Teilrahmen der zweiten Basisstation ein oder mehrere Upstream-Symbole, aber kein Downstream-Symbol umfasst, jedes der Upstream-Symbole in dem Teilrahmen der zweiten Basisstation als das Leersymbol zu konfigurieren, oder
in dem Fall, dass der Teilrahmen der zweiten Basisstation ein oder mehrere Upstream-Symbole und Downstream-Symbole umfasst und der Teilrahmen der ersten Basisstation ein oder mehrere Downstream-Symbole, aber kein Upstream-Symbol umfasst, jedes der Upstream-Symbole in dem Teilrahmen der zweiten Basisstation als das Leersymbol zu konfigurieren.

10. Vorrichtung nach Anspruch 9, wobei das Konfigurationsmodul (1002) ferner konfiguriert ist, um:
in dem Fall, dass die Symbolkonfigurationsinformationen der zweiten Basisstation ein nicht spezifiziertes Symbol enthalten und die Symbolkonfigurationsinformationen der ersten Basisstation kein nicht spezifiziertes Symbol enthalten, das nicht spezifizierte Symbol an einer Position, die einem Downstream-Symbol der ersten Basisstation entspricht, als das Leersymbol zu konfigurieren, oder
in dem Fall, dass die Symbolkonfigurationsinformationen der ersten Basisstation ein nicht spezifiziertes Symbol enthalten und die Symbolkonfigurationsinformationen der zweiten Basisstation kein nicht spezifiziertes Symbol enthalten, eine Position des nicht spezifizierten Symbols bestimmen und ein Upstream-Symbol, das der Position des nicht spezifizierten Symbols entspricht, in dem Teilrahmen der zweiten Basisstation als das Leersymbol zu konfigurieren, oder
in dem Fall, dass sowohl die Symbolkonfigurationsinformationen der zweiten Basisstation als auch der ersten Basisstation ein nicht spezifiziertes Symbol enthalten, das nicht spezifizierte Symbol der zweiten Basisstation an einer Position, die einem Downstream-Symbol der ersten Basisstation entspricht, als das Leersymbol zu konfigurieren, ein Upstream-Symbol an einer Position, die dem nicht spezifizierten Symbol der ersten Basisstation entspricht, in dem Teilrahmen der zweiten Station zu bestimmen und das Upstream-Symbol an der entsprechenden Position als das Leersymbol zu konfigurieren.

11. Vorrichtung nach Anspruch 7, wobei das Kommunikationsmodul (1003) dazu konfiguriert ist:
erste Symbolkonfigurationsinformationen an das Benutzergerät, UE, zu übertragen, so dass das UE nicht auf dem Leersymbol kommuniziert, oder
zweite Symbolkonfigurationsinformationen an das Benutzergerät, UE, zu übertragen, so dass das UE auf dem Leersymbol mit einer vorgegebenen Leistung kommuniziert.

12. Vorrichtung nach Anspruch 7, wobei die erste Basisstation eine Mikro-Basisstation innerhalb der Abdeckung der zweiten Basisstation ist, oder die erste Basisstation eine Makro-Basisstation ist, die eine Überlappungsabdeckung mit der zweiten Basisstation hat, oder die erste Basisstation benachbart zu der zweiten Basisstation ist.

13. Computerprogramm mit Anweisungen, die, wenn das Programm von einem Computer ausgeführt wird, den Computer veranlassen, das Verfahren nach einem der Ansprüche 1 bis 6 auszuführen.

## Revendications

1. Procédé de communication appliqué à une deuxième station de base, comprenant :
la réception (101), par la deuxième station de base, d'informations de configuration de symboles d'une première station de base, dans lequel les informations de configuration de symboles sont utilisées pour indiquer une configuration de symboles amont/aval dans une sous-trame de la première station de base ;
la configuration (102), par la deuxième station de base, d'un symbole spécifié dans une sous-trame de la deuxième station de base comme symbole vierge selon les informations de configuration de symboles de la première station de base et les informations de configuration de symboles de la deuxième station de base, dans laquelle le symbole spécifié est un symbole dont on prévoit qu'il causera une interférence sur la sous-trame de la première station de base pendant la communication, de manière à reconfigurer les informations de configuration de symboles de la deuxième station de base ; et
la communication (103), par la deuxième station de base, selon les informations de configuration de symboles reconfigurés ;
**caractérisé en ce que**, le procédé comprend en outre :
dans le cas où les informations de configuration de symboles de la première station de base ne comprennent pas toutes les informations de configuration de symboles dans la sous-trame de la première station de base, la détermination, par la deuxième station de base, d'une position d'un symbole cible et la configuration, par la deuxième station de base, d'un symbole amont correspondant à la position du symbole cible dans la sous-trame de la deuxième station de base comme symbole vierge, dans lequel le symbole cible est un symbole qui n'est pas inclus dans les informations de configuration de symboles dans la sous-trame de la première station de base.

2. Procédé de la revendication 1, dans lequel la réception (101), par la deuxième station de base, des informations de configuration de symboles de la première station de base comprend :
la réception, par la deuxième station de base, des informations de configuration de symboles envoyées par la première station de base après l'établissement de la deuxième station de base ; ou
la réception, par la deuxième station de base, des informations de configuration de symboles envoyées par la première station de base après une modification des informations de configuration de symboles.

3. Procédé de la revendication 1, dans lequel la configuration (102), par la deuxième station de base, du symbole spécifié dans la sous-trame de la deuxième station de base comme symbole vierge, selon les informations de configuration de symboles de la première station de base et les informations de configuration de symboles de la deuxième station de base comprend :
dans le cas où les sous-trames de chacune de la première station de base et de la deuxième station de base comprennent un ou plusieurs symboles amont et symboles aval, la détermination, par la deuxième station de base, d'une position de chevauchement des un ou plusieurs symboles amont de la deuxième station de base et des un ou plusieurs symboles aval de la première station de base, et la configuration, par la deuxième station de base, de chaque symbole amont à la position de chevauchement comme symbole vierge ; ou
dans le cas où la sous-trame de la première station de base comprend un ou plusieurs symboles amont et symboles aval et la sous-trame de la deuxième station de base comprend un ou plusieurs symboles amont mais aucun symbole aval, la configuration, par la deuxième station de base, de chacun des symboles amont dans la sous-trame de la deuxième station de base comme symbole vierge ; ou
dans le cas où la sous-trame de la deuxième station de base comprend un ou plusieurs symboles amont et symboles aval et la sous-trame de la première station de base comprend un ou plusieurs symboles aval mais aucun symbole amont, la configuration, par la deuxième station de base, de chacun des symboles amont dans la sous-trame de la deuxième station de base comme symbole vierge.

4. Procédé de la revendication 3, comprenant en outre :
dans le cas où les informations de configuration de symboles de la deuxième station de base comportent un symbole non spécifié et les informations de configuration de symboles de la première station de base ne comportent pas de symbole non spécifié, la configuration, par la deuxième station de base, du symbole non spécifié à une position correspondant à un symbole aval de la première station de base comme symbole vierge ; ou
dans le cas où les informations de configuration de symboles de la première station de base comportent un symbole non spécifié et les informations de configuration de symboles de la deuxième station de base ne comportent pas de symbole non spécifié, la détermination, par la deuxième station de base, d'une position du symbole non spécifié, et la configuration, par la deuxième station de base, d'un symbole amont correspondant à la position du symbole non spécifié dans la sous-trame de la deuxième station de base comme symbole vierge ; ou
dans le cas où les informations de configuration de symboles de chacune de la deuxième station de base et de la première station de base comportent un symbole non spécifié, la configuration, par la deuxième station de base, du symbole non spécifié de la deuxième station de base à une position correspondant à un symbole aval de la première station de base comme symbole vierge, la détermination, par la deuxième station de base, d'un symbole amont à une position correspondant au symbole non spécifié de la première station de base dans la sous-trame de la deuxième station, et la configuration, par la deuxième station de base, du symbole amont à la position correspondante comme symbole vierge.

5. Procédé de la revendication 1, dans lequel la communication (103), par la deuxième station de base, selon les informations de configuration de symboles reconfigurés comprend :
la transmission, par la deuxième station de base, de premières informations de configuration de symboles à un équipement d'utilisateur, UE, de sorte que l'UE ne communique pas sur le symbole vierge ; ou
la transmission, par la deuxième station de base, de deuxièmes informations de configuration de symboles à un équipement d'utilisateur, UE, de sorte que l'UE communique sur le symbole vierge avec une puissance prédéterminée.

6. Procédé de la revendication 1, dans lequel la première station de base est une micro station de base dans la couverture de la deuxième station de base ; ou la première station de base est une macro station de base dont la couverture chevauche celle de la deuxième station de base ; ou la première station de base est adjacente à la deuxième station de base.

7. Appareil de communication appliqué à une deuxième station de base, comprenant :
un module de réception (1001), pour recevoir des informations de configuration de symboles d'une première station de base, dans lequel les informations de configuration de symboles sont utilisées pour indiquer une configuration de symboles amont/aval dans sous-trame de la première station ;
un module de configuration (1002), pour configurer un symbole spécifié dans une sous-trame de la deuxième station de base comme symbole vierge, selon les informations de configuration de symboles de la première station de base et les informations de configuration de symboles de la deuxième station de base pour reconfigurer les informations de configuration de symboles de la deuxième station de base, dans lequel le symbole spécifié est un symbole dont on prévoit qu'il causera une interférence sur la sous-trame de la première station de base pendant la communication ; et
un module de communication (1003), pour communiquer selon les informations de configuration de symboles reconfigurés ;
**caractérisé en ce que** le module de configuration (1002) est en outre configuré pour :
dans le cas où les informations de configuration de symboles de la première station de base ne comportent pas toutes les informations de configuration de symboles dans la sous-trame de la première station de base, déterminer une position d'un symbole cible et configurer un symbole amont correspondant à la position du symbole cible dans la sous-trame de la deuxième station de base comme symbole vierge, dans lequel le symbole cible est un symbole qui n'est pas inclus dans les informations de configuration de symboles dans la sous-trame de la première station de base.

8. Appareil de la revendication 7, dans lequel le module de réception (1001) est configuré pour :
recevoir les informations de configuration de symboles envoyées par la première station de base après l'établissement de la deuxième station de base ; ou
recevoir les informations de configuration de symboles envoyées par la première station de base après une modification des informations de configuration de symboles.

9. Appareil de la revendication 7, dans lequel le module de configuration (1002) est en outre configuré pour :
dans le cas où les sous-trames de chacune de la première station de base et de la deuxième station de base comprennent un ou plusieurs symboles amont et symboles aval, déterminer une position de chevauchement des un ou plusieurs symboles amont de la deuxième station de base et des un ou plusieurs symboles aval de la première station de base et configurer chaque symbole amont à la position de chevauchement comme symbole vierge ; ou
dans le cas où la sous-trame de la première station de base comprend un ou plusieurs symboles amont et symboles aval et la sous-trame de la deuxième station de base comprend un ou plusieurs symboles amont mais aucun symbole aval, configurer chacun des symboles amont dans la sous-trame de la deuxième station de base comme symbole vierge ; ou
dans le cas où la sous-trame de la deuxième station de base comprend un ou plusieurs symboles amont et symboles aval et la sous-trame de la première station de base comprend un ou plusieurs symboles aval mais aucun symbole amont, configurer chacun des symboles amont dans la sous-trame de la deuxième station de base comme symbole vierge.

10. Appareil de la revendication 9, dans lequel le module de configuration (1002) est en outre configuré pour :
dans le cas où les informations de configuration de symboles de la deuxième station de base comporte un symbole non spécifié et les informations de configuration de symboles de la première station de base ne comportent pas de symbole non spécifié, configurer le symbole non spécifié à une position correspondant à un symbole aval de la première station de base comme symbole vierge ; ou
dans le cas où les informations de configuration de symboles de la première station de base comportent un symbole non spécifié et les informations de configuration de symboles de la deuxième station de base ne comportent pas de symbole non spécifié, déterminer une position du symbole non spécifié et configurer un symbole amont correspondant à la position du symbole non spécifié dans la sous-trame de la deuxième station de base comme symbole vierge ; ou
dans le cas où les informations de configuration de symboles de chacune de la deuxième station de base et de la première station de base comportent un symbole non spécifié, configurer le symbole non spécifié de la deuxième station de base à une position correspondant à un symbole aval de la première station de base comme symbole vierge, déterminer un symbole amont à une position correspondant au symbole non spécifié de la première station de base dans la sous-trame de la deuxième station, et configurer le symbole amont à la position correspondante comme symbole vierge.

11. Appareil de la revendication 7, dans lequel le module de communication (1003) est configuré pour :
transmettre des premières informations de configuration de symboles à un équipement d'utilisateur, UE, de sorte que l'UE ne communique pas sur le symbole vierge ; ou
transmettre des deuxièmes informations de configuration de symboles à un équipement d'utilisateur, UE, de sorte que l'UE communique sur le symbole vierge avec une puissance prédéterminée.

12. Appareil de la revendication 7, dans lequel la première station de base est une micro station de base dans la couverture de la deuxième station de base ; ou la première station de base est une macro station de base dont la couverture chevauche celle de la deuxième station de base ; ou la première station de base est adjacente à la deuxième station de base.

13. Programme informatique comprenant des instructions qui, lorsque le programme est exécuté par un ordinateur, amènent l'ordinateur à effectuer le procédé de l'une quelconque des revendications 1 à 6.
